# EUROPÄISCHE PATENTANMELDUNG

(11) **EP 3 552 792 A1**
(43) Veröffentlichungstag der Anmeldung: **16.10.2019**
(21) Anmeldenummer: 19187256.3
(22) Anmeldetag: 19.07.2019
(51) Int. Cl.: B29C 45/00, B29C 45/16, B60Q 1/00

(54) **BAUTEIL MIT TRÄGERTEIL UND DECKSCHICHT SOWIE VERFAHREN ZUR HERSTELLUNG EINES SOLCHEN BAUTEILS**

(71) Anmelder: WEIDPLAS GmbH, 8700 Küsnacht (CH)
(72) Erfinder: RUDOLF, René, 08412 Werdau (DE); BEFELEIN, Carsten, 85540 Haar (DE); LAMBERT, Sven, 8630 Rüti (CH); KINDL, Christoph, 66386 St. Ingbert (DE); QUIRING, Johannes, 59505 Bad Sassendorf (DE); FRIJTERS, Jan-Eric, 8843 Oberiberg (CH); MADRID FERNANDEZ, Paula, 8853 Lachen (CH)
(74) Vertreter: Rutz, Andrea

(57) **Zusammenfassung**

Es wird ein Bauteil (1), insbesondere für ein Fahrzeug, sowie ein Verfahren zur Herstellung eines solchen Bauteils angegeben. Das Bauteil (1) weist ein Trägerteil (2) sowie ein Element (3) auf, welches zumindest teilweise an der Hinterseite (22) und/oder am Seitenrand (23) des Trägerteils (2) angebracht ist, und welches einen vom Seitenrand (23) des Trägerteils (2) seitlich vorstehenden Bereich (31) aufweist. Ausserdem hat das Bauteil (1) eine Deckschicht (4), welche die Vorderseite (21) des Trägerteils (2) zumindest teilweise bedeckt und zumindest einen Teil der Sichtseite (11) des Bauteils (1) bildet. Der seitlich vorstehende Bereich (31) des Elements (3) kontaktiert dabei die Deckschicht (4) und bedeckt zumindest teilweise einen äusseren umlaufenden Randbereich (41) der Deckschicht (4) zur Rückseite hin.

## Beschreibung

### TECHNISCHES GEBIET

Die vorliegende Erfindung betrifft ein Bauteil mit einem Trägerteil und einer Deckschicht, welche die Vorderseite des Trägerteils zumindest teilweise bedeckt und eine Sichtseite des Bauteils bildet. Das Bauteil ist insbesondere zur Verwendung für ein Fahrzeug geeignet. Die Erfindung betrifft ausserdem ein Verfahren zur Herstellung eines solchen Bauteils.

### STAND DER TECHNIK

Bauteile mit einem Trägerteil und einer an dessen Vorderseite angespritzten Deckschicht sind insbesondere im Automobilbau beispielsweise in Form von Zier- oder Einstiegsleisten bekannt. Indem eine Deckschicht an die Vorderseite des Trägerteils angespritzt wird, kann das Bauteil widerstandsfähiger gegenüber Umgebungseinflüssen gemacht werden und/oder es können im Hinblick auf das fertige Bauteil vielfältige optische Wirkungen erzielt werden.

Die DE 10 2009 004 985 A1 offenbart ein Verkleidungsteil für Fahrzeuge, bei dem eine Lackschicht auf die Sichtschicht aufgesprüht wird, um aufgrund der widerstandsfähigen Eigenschaften des Lackes die Lebensdauer des Verkleidungsteils zu erhöhen. Beim Aufsprühen ist ein verhältnismässig grosser Verlust an kostspieligem Lackmaterial jedoch kaum vermeidbar.

Die WO 2016/193384 A1 offenbart ein Bauteil mit zwei an ein Dekorelement angespritzten Deckschichten, welche gemeinsam mit einem Bereich des Dekorelements eine Sichtseite des Bauteils bilden.

Die WO 2018/104045 A1 offenbart ein Bauteil, bei welchem eine Deckschicht an einem Trägerteil angebracht wird, indem ein Beschichtungsmaterial durch dieses hindurch gespritzt wird.

Die DE 10 2010 017 494 A1 offenbart einen Überzug eines Dekorteils für einen Fahrzeuginnenraum mit einer Lackschicht.

Die EP 3 048 015 A1 beschreibt ein Dekor- oder Verkleidungsteil für einen Fahrzeuginnenraum, mit einer an der Vorderseite angebrachten Schutz- und/oder Optikschicht. Die Schutz- und/oder Optikschicht wird mittels Sprühlackieren, Spritzgiessen oder der RIM-Technik (Reaction Injection Molding) aufgebracht.

Die noch unveröffentlichte europäische Anmeldung EP 19 177 379.5 derselben Anmelderin bezieht sich auf ein hinterleuchtbares und im Spritzgussverfahren hergestelltes Bauteil mit einer Tragschicht und einer daran angebrachten Lackschicht.

Das Anbringen einer Deckschicht an ein Trägerteil im Spritzgussverfahren hat nicht nur den Vorteil, dass dabei kaum Deckschichtmaterial verlorengeht, sondern auch, dass die Form der durch die Deckschicht gebildeten Oberfläche durch das Formteil des Spritzgusswerkzeugs vorgegeben werden kann.

Wenn zur Herstellung der Deckschicht ein sehr dünnflüssiges Material, wie insbesondere ein Lack, verwendet wird, besteht das Problem, dass die Abdichtung des Spritzgusswerkzeugs nicht ausreichend sein kann. Als Folge davon kann das Deckschichtmaterial aus dem Spritzgusswerkzeug austreten. Problematisch sind dabei nicht nur das Austreten des Materials und der damit verbundene Materialverlust sowie die Verschmutzung der Apparatur, sondern insbesondere auch, dass im Bereich der Austrittstellen am Bauteil oft sichtbare Überstände zurückbleiben.

In der DE 100 08 359 A1 wird vorgeschlagen, einen Formhohlraum mittels einer Dichtschnur abzudichten, um einen unerwünschten Austritt eines Mehrkomponentenkunststoffs beim Aufschäumen zu verhindern.

Die EP 2 684 744 B1 offenbart ein Zierteil für ein Kraftfahrzeug mit einer im Spritzgussverfahren auf ein Trägerteil aufgebrachten, aus Polyurea oder Polyurethan gebildeten Deckschicht. Um den bei der Herstellung mit Lack gefluteten Hohlraum gegen das Trägerteil abzudichten, wird eine schräge Ausbildung des Randes des Zierteils vorgeschlagen.

Die noch unveröffentlichte europäische Anmeldung EP 19 186 246.5 derselben Anmelderin schlägt das Vorsehen eines aus einem verhältnismässig weichen Material hergestellten Einsatzes in einem Formteil des Spritzgusswerkzeugs vor, um die Abdichtung beim Anspritzen eines Lackes auf ein Basisteil zu verbessern.

### DARSTELLUNG DER ERFINDUNG

Es ist also eine Aufgabe der vorliegenden Erfindung, ein Bauteil mit einem Trägerteil und einer daran angebrachten Deckschicht anzugeben, welches eine einfache Herstellung mit wenig Materialverlust auch bei Verwendung eines dünnflüssigen Deckschichtmaterials erlaubt.

Zur Lösung dieser Aufgabe wird ein Bauteil vorgeschlagen, wie es in Anspruch 1 angegeben ist. Ausserdem wird in Anspruch 15 ein Verfahren zur Herstellung eines solchen Bauteils angegeben. Bevorzugte Ausführungsformen sind in den abhängigen Ansprüchen angegeben.

Die vorliegende Erfindung stellt also ein Bauteil, insbesondere für ein Fahrzeug, mit einer Sichtseite und einer Rückseite, zur Verfügung, aufweisend
ein Trägerteil mit einer Vorderseite, einer Hinterseite und einem die Vorderseite und die Hinterseite verbindenden, umlaufenden Seitenrand;
ein Element, welches zumindest teilweise an der Hinterseite und/oder am Seitenrand des Trägerteils angebracht ist, und welches einen vom Seitenrand des Trägerteils seitlich vorstehenden Bereich aufweist; sowie
eine Deckschicht, welche die Vorderseite des Trägerteils zumindest teilweise bedeckt und zumindest einen Teil der Sichtseite des Bauteils bildet,
wobei der seitlich vorstehende Bereich des Elements die Deckschicht kontaktiert und einen äusseren umlaufenden Randbereich der Deckschicht zur Rückseite hin zumindest teilweise bedeckt.

Der seitlich vorstehende Bereich kann bei der Herstellung des Bauteils das Ausbreiten des Deckschichtmaterials begrenzen, wenn dieses zum Beispiel das Trägerteil überflutet oder daran angespritzt wird. Das Element und insbesondere dessen seitlich vorstehender Bereich kann somit beim Anbringen der Deckschicht zur Begrenzung, insbesondere Abdichtung, dienen. Dabei kann der seitlich vorstehende Bereich des Elements als Dichtmittel gegenüber dem Material der Deckschicht benutzt werden, d.h. der seitlich vorstehende Bereich dichtet gegenüber einem Formwerkzeug ab und behindert dadurch eine weitere Ausbreitung des Deckschichtmaterials. Dies ist insbesondere bei der Verwendung eines sehr dünnflüssigen Materials, wie zum Beispiel einem Lack, von Vorteil, da dadurch das Bauteil selbst bereits zumindest einen Teil der Abdichtung übernehmen und dies auf sehr wirksame Art und Weise erfüllen kann. Dabei kann der vorstehende Bereich des Elements zum Beispiel insbesondere verhindern, dass sich ein Teil des Deckschichtmaterials um den äusseren Seitenrand herum bis auf die Hinterseite des Trägerteils ausbreiten kann. Somit kann aufgrund des seitlich vorstehenden Bereichs des Elements eine einfache Herstellung des Bauteils mit wenig Materialverlust auch bei Verwendung von sehr dünnflüssigen Deckschichtmaterialien erreicht werden. Das erwähnte Element kann daher auch als Dichtelement bezeichnet werden, da es bei der Herstellung des Bauteils bevorzugt die Funktion der Abdichtung hat.

Ein Trägerteil weist üblicherweise eine derartige Eigenstabilität auf, dass es bevorzugt für die Deckschicht, noch bevorzugter für das Bauteil insgesamt, formgebend ist.

Die Deckschicht ist bevorzugt direkt auf der Vorderseite des Trägerteils angebracht, das heisst kontaktiert diese. Die Deckschicht ist vorteilhaft zudem derart an das Trägerteil angebracht, dass die Vorderseite des Trägerteils bei der Herstellung zumindest zum Teil vom Deckschichtmaterial überflutet wird. Noch vorteilhafter ist die Deckschicht an zumindest einen Teil der Vorderseite des Trägerteils angespritzt, insbesondere im Spritzgussverfahren angespritzt. Die Deckschicht ist dabei insbesondere bevorzugt sowohl an einen Teil der Vorderseite des Trägerteils angespritzt als auch an einen Teil des Elements, insbesondere an dessen seitlich vorstehenden Bereich angespritzt.

Bevorzugt ist das Element direkt, das heisst unmittelbar, an der Hinterseite und/oder am Seitenrand des Trägerteils angebracht. Mit anderen Worten kontaktiert das Element bevorzugt die Hinterseite und/oder den Seitenrand des Trägerteils. Insbesondere bevorzugt ist das Element, insbesondere dessen seitlich vorstehender Bereich, dichtend an der Hinterseite und/oder am Seitenrand des Trägerteils angebracht, so dass bei der Bauteilherstellung das dann dünnflüssige Deckschichtmaterial nicht zwischen Trägerteil und Element hindurch gelangen kann. Vorteilhaft haftet das Material des Elementes insbesondere im seitlich vorstehenden Bereich am Material des Trägerteils. Alternativ oder zusätzlich kann das Material des Elementes aber, insbesondere im seitlich vorstehenden Bereich, auch am Material der Deckschicht haften. Um die Haftung des Elements am Trägerteil und/oder an der Deckschicht zu erreichen oder zu verbessern, kann ein Klebstoff und/oder Haftvermittler vorgesehen sein. Der Klebstoff und/oder Haftvermittler kann transparent, transluzent oder opak sein. Bevorzugt ist das Element stoffschlüssig mit dem Trägerteil und/oder der Deckschicht verbunden. Das Element kann dabei insbesondere unlösbar am Trägerteil angebracht sein, das heisst, dass das Element nur mittels Zerstörung des Bauteils, bevorzugt sogar nur mittels Zerstörung des Elements und/oder des Trägerteils, vom Trägerteil entfernt werden kann.

In einer insbesondere bevorzugten Ausführungsform ist die Deckschicht zumindest in ihrem äusseren umlaufenden Randbereich, vorzugsweise jedoch vollständig, zur Rückseite hin bedeckt. Vorzugweise bedeckt dabei der seitlich vorstehende Bereich des Elements den äusseren umlaufenden Randbereich der Deckschicht zur Rückseite hin zumindest teilweise oder sogar vollständig. Dadurch kann gewährleistet werden, dass das Deckschichtmaterial bei der Herstellung nicht über den seitlich vorstehenden Bereich des Elements hinauslaufen kann.

Die Deckschicht dient bevorzugt dazu, die Widerstandsfähigkeit des Bauteils gegenüber externen Einflüssen zu erhöhen und/oder eine bestimmte optische Wirkung zu erzielen. Vorteilhaft zeichnet sich das Material der Deckschicht gegenüber dem Material des Trägerteils deshalb als besonders kratzfest, chemisch beständig, glänzend und/oder matt aus.

In einer bevorzugten Ausführungsform ist das Trägerteil oder das Element zumindest teilweise oder vollständig im Spritzgussverfahren hergestellt. Vorteilhaft sind sogar sowohl das Trägerteil als auch das Element jeweils zumindest teilweise oder vollständig im Spritzgussverfahren hergestellt. Trägerteil und Element können insbesondere im Zweikomponentenspritzgussverfahren hergestellt sein. Zudem ist unabhängig von der Herstellungsart des Trägerteils und des Elements bevorzugt auch die Deckschicht im Spritzgussverfahren hergestellt. Dabei eignen sich insbesondere Kunststoffe zur Herstellung des Trägerteils und/oder des Elements im Spritzgussverfahren. Die Deckschicht ist vorteilhaft an die Vorderseite des Trägerteils angespritzt. Besonders bevorzugt ist einerseits das Element an das Trägerteil angespritzt oder das Trägerteil an das Element und andererseits die Deckschicht an das Trägerteil und an das Element angespritzt. Auf diese Weise kann das Bauteil auch bei Verwendung eines sehr dünnflüssigen Deckschichtmaterials einfach hergestellt werden.

Das Trägerteil kann eine Schicht bilden, welche mit der Deckschicht laminiert ist. Die üblicherweise zur Sichtseite des Bauteils hin gewandte Vorderseite des Trägerteils wird von der Deckschicht bevorzugt zu zumindest 20 Prozent, bevorzugter zu zumindest 30 Prozent, noch bevorzugter zu zumindest 40 Prozent, noch bevorzugter zu zumindest 50 Prozent, noch bevorzugter zu zumindest 75 Prozent, und am bevorzugtesten zu zumindest 95 Prozent, bedeckt. Die Deckschicht kann insbesondere die gesamte Vorderseite oder sogar die gesamte Vorderseite und den gesamten Seitenrand des Trägerteils bedecken, um zum Beispiel das Trägerteil besonders gut vor externen Einflüssen zu schützen. Vorzugsweise bildet die Deckschicht die Sichtseite des Bauteils zu zumindest 20 Prozent, bevorzugt zu zumindest 30 Prozent, bevorzugter zu zumindest 40 Prozent, noch bevorzugter zu zumindest 50 Prozent, noch bevorzugter zu zumindest 75 Prozent, und am bevorzugtesten zu zumindest 95 Prozent oder gar zu 100 Prozent.

Das Trägerteil kann aus mehreren Schichten gebildet sein. Ebenso kann die Deckschicht aus mehreren Schichten, insbesondere aus mehreren aus Lack hergestellten Schichten, gebildet sein. Bei einer Deckschicht, welche aus mehreren Schichten hergestellt ist, sind die jeweiligen Schichten vorteilhaft aus unterschiedlichen Materialien hergestellt. Die Schichten, welche zusammen die Deckschicht bildet können unterschiedliche oder identische Brechungsindizes aufweisen. Die Brechungsindizes können insbesondere von Schicht zu Schicht alternieren. Bei unterschiedlichen Brechungsindizes kann Licht bei seiner Ausbreitung länger in den jeweiligen Schichten verbleiben. Bei identischen Brechungsindizes kann das Licht hingegen einfacher von Schicht zu Schicht gelangen. Je nach Ausführungsform kann das eine oder das andere gewünscht sein. Eine mehrlagige Deckschicht kann alternativ auch zum Beispiel aus verschiedenen Kunststoffschichten oder alternierend aus einer mehrfachen Abfolge von jeweils einer Kunststoffschicht, welche kein Lack ist, und einer Lackschicht bestehen. In gewissen Ausführungsformen kann eine oberste Schicht ablösbar von den restlichen Schichten der Deckschicht ausgebildet sein und zum Beispiel eine Schutzschicht für die Lagerung und den Transport des Bauteils bilden.

Das Bauteil bildet bevorzugt ein Dekorelement. Bevorzugt ist es zudem für den Automobilbau und insbesondere als Einstiegs- oder Zierleiste vorgesehen.

Nach einer Weiterbildung der Erfindung ist das Bauteil geeignet für ein Fahrzeug, insbesondere für ein Kraftfahrzeug. Bevorzugt weist ein Fahrzeug, insbesondere ein Kraftfahrzeug, das Bauteil auf. Im Falle, dass das Bauteil für ein Fahrzeug, insbesondere für ein Kraftfahrzeug, geeignet ist, kann das Bauteil insbesondere eine Fensterführungsblende, ein Spoiler, eine Verblendung einer A-, B-, C- oder D-Säule, eine Dreiecksblende, eine Fensterschachtleiste, eine Wasserfangleiste, eine Abdeckung oder Blende im Dachbereich, wie beispielsweise eine Abdeckung eines Panoramadaches, eine Abdeckung oder Blende im Konsolenbereich, eine Abdeckung oder Blende im Bereich des Armaturenbrettes, eine Blende oder Abdeckung im Türbereich, eine Blende oder Abdeckung im Bereich eines Kühlergrills, der Ladekante oder an einer Heckklappe, eine Zier-, Einstiegs- oder Türleiste, ein Emblem, oder eine Stossfängerverkleidung sein.

Beim Bauteil kann es sich um ein Interieurbauteil oder um ein Exterieurbauteil eines Fahrzeugs handeln. Im Falle eines Interieurbauteils ist die Deckschicht bevorzugt aus einem Softlack oder aus einem kratzfesten Lack, bevorzugter aus einem kratzfesten Lack, hergestellt. Im Falle eines Exterieurbauteils ist die Deckschicht bevorzugt aus einem kratzfesten Lack hergestellt. Falls es sich um ein Exterieurbauteil handelt, weist dieses bevorzugt zumindest eine semipermeable Membran auf, um Feuchtigkeit aus dem Bauteil entweichen zu lassen, ohne dass von aussen her Feuchte in das Bauteil eindringen kann. Ausserdem kann das Trägerteil im Falle eines Exterieurbauteil insbesondere aus Polycarbonat hergestellt sein mit bevorzugt einer Erweichungstemperatur von mehr als 130°, bevorzugter von mehr als 140° und am bevorzugtesten von ca. 145°.

Nach einer Weiterbildung der Erfindung ist das Bauteil geeignet für ein Haushaltsgerät, wie beispielsweise einen Kühlschrank, einen Dampfgarer, eine Waschmaschine, einen Wäschetrockner, einen Backofen, einen Kochherd, eine Geschirrspülmaschine oder ein Möbel. Bevorzugt weist das Haushaltsgerät oder das Möbel das Bauteil auf.

Nach einer Weiterbildung der Erfindung ist das Bauteil geeignet für Geräte, welche bei Verfahren zur chirurgischen oder therapeutischen Behandlung des menschlichen oder tierischen Körpers Anwendung finden, oder geeignet für Geräte, welche bei Diagnostizierverfahren, die bei menschlichen oder tierischen Körper vorgenommen werden, Anwendung finden. Bevorzugt weist ein solches Gerät das Bauteil auf.

Nach einer Weiterbildung der Erfindung ist das Bauteil geeignet für Konsumgüter, wie beispielsweise eine Kaffeemaschine oder einen Staubsauger, insbesondere für die Konsumgüterelektronik, wie beispielsweise einen Computer, einen Drucker, einen Scanner, einen Kopierapparat, einen Fernseher, einen CD-Spieler oder einen DVD-Spieler. Bevorzugt weist ein solches Konsumgut, insbesondere eine solche Konsumgüterelektronik, das Bauteil auf.

Nach einer Weiterbildung der Erfindung ist das Bauteil geeignet für einen Brausekopf, eine Sanitärarmatur, ein Klosett, eine Dusche oder einen Spülkasten. Das Bauteil ist beispielsweise ein Bestandteil des Brausekopfes, der Sanitärarmatur, des Klosetts, der Dusche oder des Spülkastens.

Nach einer Weiterbildung der Erfindung ist das Bauteil als Bedienelement ausgebildet, welches beispielsweise mittels Berührung oder berührungslos bedienbar ist.

Das Trägerteil ist bevorzugt und insbesondere im Spritzgussverfahren wenigstens bereichsweise, bevorzugt vollständig, aus Kunststoff hergestellt. Alternativ kann es aber zum Beispiel wenigstens bereichsweise, bevorzugt vollständig, auch aus Metall, Glas, Keramik oder Holz hergestellt sein. Im Falle eines Kunststoffes kann der Kunststoff einen Thermoplasten aufweisen oder aus diesem Thermoplasten bestehen, welcher vorzugsweise Polymethylmethacrylat (PMMA), Polystyrol (PS), ein aromatischer Polyester, Polyethylenterephthalat (PET), Polymethacrylmethylimid (PMMI), ein Cyclo-Olefin-Copolymer (COC), ein Cyclo-Olefin-Polymer (COP), ein Styrol-Acrylnitril-Copolymer (SAN), Acrylnitril-Butadien-Styrol (ABS), Acrylester-Styrol-Acrylnitril (ASA), Acrylnitril Butadien Styrol / Polycarbonat (ABS-PC), Polycarbonat (PC), Polycarbonat / Polybutylenterephthalat (PC-PBT), Acrylester-Styrol-Acrylnitril / Polycarbonat (ASA-PC) oder eine Mischung der genannten Substanzen ist. Falls der Kunststoff einen Duroplasten aufweist oder aus einem Duroplasten besteht, so ist dieser Duroplast vorzugweise Polyurethan (PU) oder Polyurea (PUA) oder eine Mischung der genannten Substanzen. Falls der Kunststoff ein Elastomer umfasst oder aus einem Elastomer besteht, so ist dieses Elastomer bevorzugt ein Silikon, bevorzugter ein Silikonkautschuk. Das Trägerteil kann während des Spritzgiessens geschäumt werden, um Einfallstellen zu vermeiden. Das Schäumen kann mittels insbesondere unter Einsatz von chemischen und/oder physikalischen Treibmitteln erfolgen.

Das Element ist bevorzugt und insbesondere im Spritzgussverfahren wenigstens bereichsweise, bevorzugt vollständig, aus Kunststoff hergestellt. Es kann transparent oder transluzent oder aber opak ausgebildet sein. Im Falle von Kunststoff kann der Kunststoff einen Thermoplasten aufweisen oder aus diesem Thermoplasten bestehen, welcher vorzugsweise Polymethylmethacrylat (PMMA), Polystyrol (PS), ein aromatischer Polyester, Polyethylenterephthalat (PET), Polymethacrylmethylimid (PMMI), ein Cyclo-Olefin-Copolymer (COC), ein Cyclo-Olefin-Polymer (COP), ein Styrol-Acrylnitril-Copolymer (SAN), Acrylnitril-Butadien-Styrol (ABS), Acrylester-Styrol-Acrylnitril (ASA), Acrylnitril Butadien Styrol / Polycarbonat (ABS-PC), Polycarbonat (PC), Polycarbonat / Polybutylenterephthalat (PC-PBT), Acrylester-Styrol-Acrylnitril / Polycarbonat (ASA-PC) oder eine Mischung der genannten Substanzen ist. Falls der Kunststoff einen Duroplasten aufweist oder aus einem Duroplasten besteht, so ist dieser Duroplast vorzugweise Polyurethan (PU) oder Polyurea (PUA) oder eine Mischung der genannten Substanzen. Falls der Kunststoff ein Elastomer umfasst oder aus einem Elastomer besteht, so ist dieses Elastomer bevorzugt ein Silikon, bevorzugter ein Silikonkautschuk. Ein thermoplastisches Elastomer kann dabei von Vorteil sein, da dann eine bessere Anbindung des Elements an das Trägerteil erreicht werden kann. Das Element kann während des Spritzgiessens geschäumt werden, um Einfallstellen zu vermeiden. Das Schäumen kann mittels insbesondere unter Einsatz von chemischen und/oder physikalischen Treibmitteln erfolgen.

Die in vielen Ausführungsformen aufgrund der verbesserten Abdichtung gewünschte Flexibilität des Elements, kann die Anbindung an die Deckschicht beeinträchtigen. Dies kann insbesondere dann der Fall sein, wenn die Deckschicht aus einem Lack hergestellt ist. Um dem Abhilfe zu schaffen, kann das Element, insbesondere wenn es aus Kunststoff hergestellt ist, Verstärkungsmittel aufweisen, wie zum Beispiel Fasern und/oder Füllstoffe, wie zum Beispiel mineralische Füllstoffe. Die Fasern können insbesondere aus einem transluzenten oder transparenten Material hergestellt sein und dadurch zur Lichtleitung dienen. Die Fasern können zum Beispiel aus Metall, Kunststoff, Glas oder Kohlenstoff hergestellt sein. Zur Verbesserung der Anbindung an die Deckschicht kann das Element und/oder die Deckschicht und/oder das Trägerteil auch Oberflächenstrukturen in Form von lokalen Erhebungen und/oder Vertiefungen aufweisen, die zum Eingreifen in die Deckschicht bzw. das Element bzw. das Trägerteil ausgebildet sind. Die Oberflächenstrukturen können zusätzlich zur gezielten Lichtumlenkung dienen. Alternativ oder zusätzlich kann ein Haftvermittler und/oder Klebstoff vorgesehen sein, der zur Lichtleitung transparent oder transluzent ausgebildet sein kann. Des Weiteren kann das Element insbesondere im seitlich vorstehenden Bereich einer Plasma- oder Koronabehandlung unterzogen sein, um die Anbindung an die Deckschicht zu verbessern. Das Trägerteil kann ebenfalls einer Plasma- oder Koronabehandlung unterzogen sein, um die Anbindung an die Deckschicht zu verbessern.

Das Trägerteil und/oder die Deckschicht und/oder das Element können wenigstens bereichsweise transluzent oder transparent ausgebildet sein. Das Trägerteil und/oder die Deckschicht und/oder das Element können insbesondere vollständig transluzent oder transparent ausgebildet sein. Dies erlaubt die Herstellung eines beleuchtbaren, hinterleuchtbaren oder umstrahlbaren Bauteils mit vielfältigen optischen Designmöglichkeiten. Das Trägerteil und/oder die Deckschicht und/oder das Element können aber auch bereichsweise oder vollständig opak ausgebildet sein. Zur Erzielung weiterer optischer Effekte können das Trägerteil und/oder die Deckschicht und/oder das Element einen Farbstoff, insbesondere Farbpigmente, beinhalten. Der Farbstoff, insbesondere die Farbpigmente, können homogen oder inhomogen innerhalb der Deckschicht und/oder des Trägerteils und/oder des Elements angeordnet sein. Gemäss einer Ausführungsform können die Farbstoffe lumineszierende Farbstoffe, insbesondere fluoreszierende und/oder phosphoreszierende Farbstoffe, sein. Gemäss einer bevorzugten Ausführungsform weist das Trägerteil und/oder die Deckschicht und/oder das Element einerseits opake und andererseits transluzente oder transparente Bereiche auf. Dies bietet den Vorteil, dass verschiedenste Designvarianten des Bauteils möglich sind. Insbesondere kann von einem Leuchtmittel des Bauteils ausgesandtes Licht selektiv durch die transluzenten oder transparenten Bereiche des Trägerteils und/oder der Deckschicht und/oder des Elements hindurchtreten. Gemäss einer bevorzugten Ausführungsform kann das Trägerteil und/oder die Deckschicht und/oder das Element wenigstens bereichsweise eine reflektierende Oberfläche aufweisen und/oder wenigstens teilweise aus einem reflektierenden Material hergestellt sein. Durch reflektierende Oberflächen oder reflektierendes Material können beispielsweise Lichtverluste aus dem Bauteil vermindert und/oder Designeffekte erzielt werden.

Das Material der Deckschicht hat bevorzugt einen Brechungsindex, der höher ist als der Brechungsindex des Materials des Elements und/oder des Materials des Trägerteils. Dies bietet den Vorteil, dass das Licht bei seiner Ausbreitung innerhalb der Deckschicht bleibt.

Gemäss einer Weiterbildung der Erfindung weist das Trägerteil und/oder die Deckschicht und/oder das Element des Bauteils eine oder mehrere Lichtumlenkstrukturen auf. Durch das Vorsehen von Lichtumlenkstrukturen kann eine gezielte Lichtumlenkung des von einem Leuchtelement ausgestrahlten Lichtes in eine oder mehrere bestimmte Richtungen oder in einen oder mehrere bestimmte Richtungsbereiche erreicht werden. Dadurch, dass die von den Lichtumlenkstrukturen bewirkte Lichtumlenkung gezielt in eine oder mehrere bestimmte Richtungen oder in einen oder mehrere bestimmte Richtungsbereiche erfolgt, können vielfältige spezielle Effekte erzeugt werden, um die Aufmerksamkeit des Betrachters noch besser auf das Bauteil zu lenken. Darüber hinaus kann das vom Leuchtelement ausgestrahlte Licht auf besonders effiziente Art und Weise benutzt werden.

Die eine oder die mehreren Lichtumlenkstrukturen sind bevorzugt in oder am Trägerteil, in oder am Element und/oder in oder an der Deckschicht angeordnet. Verluste bei der Lichtausbreitung können dadurch minimiert werden. Beispielsweise können die Lichtumlenkstrukturen als lokale chemische oder physikalische, im Inneren oder an einer Oberfläche angeordnete Materialveränderungen oder als Oberflächenstrukturen in Form von lokalen Oberflächenerhebungen und/oder -vertiefungen vorgesehen sein. Die Oberflächenstrukturen können insbesondere als Grenzflächenstrukturen zwischen zwei Komponenten ausgewählt aus dem Element, dem Trägerteil und der Deckschicht ausgebildet sein und dann zusätzlich zur besseren Anbindung der beiden Komponenten aneinander dienen. Auch das Einbringen von Fremdmaterialien oder von Lufteinschlüssen zur Ausbildung der Lichtumlenkstrukturen ist denkbar. Die Lichtumlenkstrukturen können insbesondere mittels eines Lasers erzeugt sein.

Das Leuchtelement kann ein Teil des Bauteils darstellen. Das Leuchtelement kann insbesondere an der Hinterseite des Trägerteils angeordnet sein, um die Deckschicht durch das transparent oder transluzent ausgebildete Trägerteil hindurch zu hinterleuchten. Alternativ oder zusätzlich kann das Leuchtelement auch im Bereich eines im Trägerteil vorgesehenen Durchbruchs angeordnet sein, um die Deckschicht durch den Durchbruch hindurch zu hinterleuchten. An der Hinterseite des Trägerteils kann zum Beispiel auch ein Lichtleiter angeordnet sein, um das vom Leuchtelement ausgestrahlte Licht zum transparent oder transluzent ausgebildeten Trägerteil und/oder zu den mehreren Durchbrüchen zu verteilen. Alternativ kann das Leuchtelement auch als ein flächiges Leuchtelement, wie beispielsweise eine Leuchtfolie, wie zum Beispiel eine Elektrolumineszenzfolie oder eine OLED-Folie, ausgebildet sein, welche auf der Hinterseite des Trägerteils angeordnet ist.

Besondere optische Effekte und insbesondere die Anzeige von Symbolen, Buchstaben, Schriftzügen, Piktogrammen etc. sind möglich, wenn das Trägerteil und/oder die Deckschicht und/oder das Element bereichsweise opak und bereichsweise transparent oder transluzent ausgebildet ist. Wenn die Deckschicht und das Trägerteil gemeinsam die Sichtseite des Bauteils bilden, ist es aber auch möglich, dass die Deckschicht opak und das Trägerteil transparent oder transluzent ausgebildet ist (oder umgekehrt), um zum Beispiel Symbole, Buchstaben, Schriftzüge, Piktogramme etc. darzustellen.

Das Trägerteil und/oder das Element kann, insbesondere falls es aus Kunststoff hergestellt ist, Additive wie Entformungsmittel, Thermostabilisatoren, UV-Absorber, aber auch Flammschutzmittel, IR-Absorber, Antistatika, Farbmittel etc. enthalten.

In einer insbesondere bevorzugten Ausführungsform ist die Deckschicht aus einem Lack und vorteilhaft im Spritzgussverfahren hergestellt. Beim Lackmaterial kann es sich insbesondere um ein hochfluides, das heisst sehr dünnflüssiges Material handeln. Das Lackmaterial der Deckschicht kann bei der Herstellung chemisch mit dem Material des Trägerteils und/oder des Elements reagieren und dadurch eine besonders feste Bindung mit diesem eingehen. Bevorzugt enthält der Lack Polyurea oder Polyurethan. Der Lack kann ein Einkomponentenlack oder ein Mehrkomponentenlack, insbesondere ein Zweikomponentenlack, sein. Im Falle eines Zweikomponentenlacks ist die erste Komponente beispielsweise Polyol und die zweite Komponente beispielsweise ein Polyisocyanat, so dass aus der Reaktion des Polyols und des Polyisocyanats ein vernetztes Polymer, d.h. Polyurethan, entsteht. Alternativ kann im Falle eines Zweikomponentenlacks die erste Komponente beispielsweise ein Isocyanat und die zweite Komponente beispielsweise ein Amin sein, so dass aus der Reaktion des Isocyanats und des Amins ein vernetztes Polymer, d.h. Polyurea, entsteht. Je nach dem gewünschten Design kann die Lackschicht hochglänzend oder matt sein. Der Lack kann ein Softlack mit bevorzugt einem Härtegrad von weniger als 20 Shore-A sein, welcher bevorzugt gemäss der Norm DIN 53505, Ausgabe vom August 2000, gemessen ist, und/oder ein kratzfester Lack mit bevorzugt einem Härtegrad von 20 Shore-A bis 100 Shore-D, insbesondere von 20 Shore-A bis 65 Shore-D, sein, wobei der Härtegrad jeweils bevorzugt gemäss der Norm DIN 53505, Ausgabe vom August 2000, gemessen ist. Dem Fachmann sind Lacke bekannt. Alternativ kann die Deckschicht auch aus einem anderen beliebigen Kunststoff hergestellt sein. So kann die Deckschicht aus einem Kunststoff wie beispielsweise Polyamid (PA), Acrylester-Styrol-Acrylnitril (ASA), Polycarbonat (PC), Acrylnitril-Butadien-Styrol (ABS), Polymethylmethacrylat (PMMA) oder deren Blends, wie beispielsweise Acrylnitril-Butadien-Styrol/Polycarbonat, hergestellt sein.

Das Trägerteil wird bevorzugt im Spritzgussverfahren aus einem Material hergestellt, das beim Einspritzen in die Spritzgussform eine höhere Viskosität aufweist als das Deckschichtmaterial beim Einspritzen in die Spritzgussform. Insbesondere falls es sich beim Deckschichtmaterial um einen Lack handelt, weist dieses bevorzugt zum Zeitpunkt, an welchem es auszuhärten beginnt, vorteilhaft eine bei 65 °C gemessene Viskosität im Bereich von 40 mPa*s bis 500 mPa*s auf. Im Falle eines Zweikomponentenlackes ist der Zeitpunkt, an welchem der Lack auszuhärten beginnt, bevorzugt der Zeitpunkt unmittelbar nachdem die Komponenten des Lackes miteinander vermischt worden sind. Bei derartigen Viskositätswerten ist eine gute Fliessfähigkeit des Beschichtungsmaterials gewährleistet. Vorteilhaft wird die Viskosität gemäss der Norm DIN 53019-1, Ausgabe September 2008 gemessen. Bevorzugt wird die Messung der Viskosität mit einem Kegel-Platte-Rotationsviskosimeter durchgeführt, welcher einen fixierten Messbecher und einen rotierenden Messkörper aufweist. Für die Viskositätsmessung kann beispielsweise der Viskosimeter Rheomat R 180 der Firma proRheo GmbH (Bahnhofstrasse 40 / 2, 75382 Althengstett, Deutschland) verwendet werden.

Die Dicke der Deckschicht liegt bevorzugt in einem Bereich von grösser als 0 bis maximal 12'000 Mikrometer, bevorzugter von grösser als 25 bis maximal 12'000 Mikrometer, noch bevorzugter von grösser als 25 bis maximal 3'000 Mikrometer, noch bevorzugter von grösser als 25 bis maximal 1'000 Mikrometer, noch bevorzugter von grösser als 25 bis maximal 800 Mikrometer, noch bevorzugter von grösser als 25 bis maximal 600 Mikrometer, noch bevorzugter von grösser als 25 bis maximal 400 Mikrometer, noch bevorzugter von grösser als 25 bis maximal 200 Mikrometer, noch bevorzugter von grösser als 25 bis maximal 200 Mikrometer, und am bevorzugtesten von grösser als 25 bis weniger als 100 Mikrometer. Bei einer zu dicken Deckschicht werden die Kosten zur Herstellung des Bauteils hoch. Bei einer zu dünnen Deckschicht wird das Bauteil hingegen anfällig für Kratzer, da sich diese durch die Deckschicht hindurch erstrecken können. Ausserdem kann der physikalische und chemische Schutz des Trägerteils durch die Deckschicht dann nicht mehr ausreichend sein. Die angegebenen bevorzugten Dickenbereiche stellen ein Optimum zwischen diesen einander entgegenlaufenden Anforderungen dar.

Bevorzugt ist die Deckschicht über ihre gesamte Flächenerstreckung im Wesentlichen gleich dick. Dies bietet den Vorteil, dass die Sichtseite des Bauteils homogen ausgeleuchtet werden kann. Die Deckschicht kann über ihre Flächenerstreckung aber auch eine variierende Dicke aufweisen. Dies ermöglicht die Erzeugung von verschiedensten Designeffekten. Bei dünneren Deckschichten ist die Helligkeit der Ausleuchtung der Sichtseite grösser als bei Deckschichten mit einer vergleichsweise grösseren Dicke. So können durch Variation der Dicke der Deckschicht unterschiedliche Helligkeiten an der Sichtseite des Bauteils erzielt werden.

Das Trägerteil weist bevorzugt eine Dicke von 1 Millimeter oder grösser auf. Dadurch ist eine gewisse strukturelle Stabilität des Trägerteils gewährleistet. Um Materialkosten zu sparen, weist das Trägerteil bevorzugt jedoch eine maximale Dicke von 10 Millimeter auf. Insbesondere falls das Trägerteil aus thermoplastischem Kunststoff im Spritzguss hergestellt ist, weist das Trägerteil bevorzugt eine maximale Dicke von 10 Millimeter auf, da bei einer solchen Dicke eine rasche Abkühlung des Trägerteils nach dessen Herstellung noch möglich ist.

Die Deckschicht schliesst in ihrem Randbereich, das heisst mit ihrer seitlichen Randfläche, bevorzugt bündig mit dem Element ab. Dies kann optische aber auch funktionelle Vorteile mit sich bringen, indem aufgrund des bündigen Abschlusses zum Beispiel Schmutzablagerungen reduziert werden können.

Gemäss einer Weiterbildung der Erfindung kann das Element, insbesondere mit seinem seitlich vorstehenden Bereich, aber auch seitlich über den Randbereich, das heisst die seitliche Randfläche, der Deckschicht vorstehen. Dies hat den Vorteil, dass sich das Element dadurch bei der Herstellung in eine im Formteil des Spritzgusswerkzeugs ausgebildete Vertiefung hinein erstrecken kann, um eine noch bessere Abdichtung gegenüber dem Spritzgusswerkzeug zu erreichen.

An der Hinterseite des Trägerteils und/oder an einer Rückseite des Elements kann eine Vertiefung ausgebildet sein, in welche ein Leuchtelement und/oder ein Sensor aufgenommen sein kann. Das Leuchtelement bzw. der Sensor ist dann besonders leicht montierbar und besonders gut vor Umwelteinflüssen geschützt. Das Leuchtelement und/oder der Sensor kann sogar teilweise oder vollständig im Inneren des Trägerteils und/oder des Elements angeordnet sein. Dabei kann das Leuchtelement und/oder der Sensor insbesondere vom Material des Trägerteils und/oder des Elements wenigstens teilweise, bevorzugt vollständig, umhüllt, insbesondere umspritzt, sein. Das Trägerteil und/oder Element bildet dann in Bezug auf das Leuchtelement bzw. Sensor eine Schutzumhüllung, welche im Falle des Leuchtelements vorzugsweise transparent oder transluzent ausgebildet ist.

Das Element und insbesondere der seitlich vorstehende Bereich des Elements sind bevorzugt aus einem anderen Material hergestellt als das Trägerteil. Mit einem anderen Material ist gemeint, dass die Materialzusammensetzung des Elements anders ist als diejenige des Trägerteils. Das Material des Elements kann dadurch frei gewählt und optimal an die Funktion, insbesondere die Abdichtfunktion, des Elements angepasst werden. Alternativ kann das Element und insbesondere der seitlich vorstehende Bereich des Elements aber auch aus demselben, d.h. einem identischen Material hergestellt sein wie das Trägerteil, wobei das Element dann aber nicht einstückig, sondern zwei- oder mehrstückig mit dem Trägerteil ausgebildet ist. Ein identisches Material zeichnet sich durch eine identische Materialzusammensetzung aus.

Gemäss einer Weiterbildung der Erfindung ist das Element und insbesondere dessen seitlich vorstehender Bereich aus einem weicheren Material hergestellt als das Trägerteil. Aufgrund des weicheren Materials kann eine besonders gute Abdichtung erreicht werden, indem das Element bzw. der seitlich vorstehende Bereich z.B. im Spritzgusswerkzeug leicht zusammengepresst wird bzw. sich leicht verformt. Das Element kann dann bei der Herstellung z.B. als Dichtlippe wirken. Das Element kann dadurch kraft- und formschlüssig im Spritzgusswerkzeug angeordnet werden und für eine besonders gute Abdichtung sorgen. Vorteilhaft ist es aus demselben Grund, wenn das Element und insbesondere der seitlich vorstehende Bereich aus einem elastischen Material hergestellt ist.

Der seitlich vorstehende Bereich des Elements erstreckt sich vorteilhaft umlaufend um das Trägerteil herum. Das Deckschichtmaterial kann dann beim Anbringen z.B. die gesamte Vorderseite und allenfalls den gesamten Seitenrand des Trägerteils überfluten und wird dabei in seiner Ausbreitung umlaufend und dicht vom Element begrenzt. Bevorzugt kontaktiert die Deckschicht deshalb den seitlich vorstehenden Bereich des Elements durchgehend und umlaufend um das Trägerteil herum.

Die Deckschicht weist bevorzugt einen äusseren Randbereich mit einer sich schräg erstreckenden Aussenfläche auf, die in einem Winkel von 40° bis 89° zur Flächenausdehnungsrichtung der Vorderseite des Trägerteils steht. Eine Aussenfläche, die in einem solchen Winkel zur Vorderseite des Trägerteils steht, bildet nicht nur einen ästhetisch ansprechenden Abschluss des Bauteils, sondern ermöglicht auch eine gute Ausleuchtung der Deckschicht, wenn diese transparent oder transluzent und insbesondere verhältnismässig dünn ausgebildet ist. Die Aussenfläche kann aber auch in einem Winkel von mehr als 85° bis 89° zur Flächenausdehnungsrichtung der der Vorderseite des Trägerteils stehen, um dadurch zum Beispiel einen aus Sicht des Betrachters klar definierten seitlichen Abschluss der Sichtfläche zu bilden.

Bevorzugt sind das Trägerteil und das Element im Spritzgussverfahren aneinander angespritzt. Aneinander angespritzt sind das Trägerteil und das Element zum Beispiel dann, wenn bei der Herstellung des Bauteils das Element entweder an das Trägerteil oder das Trägerteil an das Element angespritzt wird. Dadurch entsteht eine besonders gute Bindung und somit Abdichtung zwischen Trägerteil und Element.

Gemäss einer Weiterbildung der Erfindung kann das Element die Funktion zum Beispiel eines Lichtleiters, eines Leuchtelements oder eines Sensors haben. Im Falle eines Lichtleiters dient das Element zum Leiten des von einem Leuchtelement ausgestrahlten Lichts, um dieses zum Beispiel zur Rückseite einer transparent oder transluzent ausgebildeten Deckschicht hin zu leiten. Falls das Element die Funktion eines Leuchtelements hat, kann es insbesondere als flächiges Leuchtelement ausgebildet sein. Ein flächiges Leuchtelement ist beispielsweise eine OLED-Folie, eine Elektrolumineszenzfolie oder ein Display. Eine weitere und insbesondere bevorzugte Variante eines flächigen Leuchtelements, welches durch das erwähnte Element gebildet werden kann, stellt eine Platine mit einer oder mehreren darauf angebrachten Leuchtdioden (LED's) dar. Die Platine ist vorteilhaft semiflexibel oder starr ausgebildet und ist bevorzugt aus einem Trägermaterial hergestellt, das Phenolharz, Epoxidharz, Polytetrafluorethylen und/oder Keramik umfasst. Das flächige Leuchtelement ist bevorzugt mittels transparentem oder transluzentem Klebstoff und/oder Haftvermittler oder mechanisch an der Hinterseite des Trägerteils befestigt. Die Ausbildung des Elements als Leuchtelement, insbesondere als flächiges Leuchtelement erlaubt eine direkte Einkopplung von Licht in die Deckschicht. Nebst der Abdichtung bei der Herstellung des Bauteils hat das Element somit bevorzugt noch weitere Funktionen, welche insbesondere beim fertig hergestellten und bestimmungsgemäss verwendeten Bauteil zum Tragen kommen können.

Trägerteil und/oder Deckschicht und/oder Element können insbesondere als Diffusor ausgebildet sein, um eine gleichmässigere Ausleuchtung des Bauteils zu erreichen.

Die Deckschicht ist bevorzugt zumindest in ihrem äusseren umlaufenden Randbereich zumindest teilweise oder vollständig zur Rückseite hin bedeckt. Die Deckschicht kann sogar vollständig zur Rückseite hin bedeckt sein. Vorzugsweise ist sie dabei in beiden Fällen vom Trägerteil sowie vom Element zur Rückseite hin bedeckt. Besonders bevorzugt ist sie in ihrem äusseren umlaufenden Randbereich vom Element, insbesondere vom seitlich vorstehenden Bereich des Elements, zumindest teilweise oder vollständig zur Rückseite hin bedeckt. Der sich innerhalb des äusseren umlaufenden Randbereichs befindliche Teil der Deckschicht ist bevorzugt zumindest teilweise oder vollständig vom Trägerteil und/oder vom Element zur Rückseite hin bedeckt.

Gemäss einer Weiterbildung der Erfindung kann der seitlich vorstehende Bereich im Wesentlichen das gesamte Element bilden. Das Element ist dann ausschliesslich im Bereich des Seitenrandes des Trägerteils sowie seitlich davon angeordnet. Das Trägerteil und die Deckschicht können dann im Vergleich zum Element einen gewichtsmässig besonders grossen Anteil des Bauteils ausmachen, um dem Bauteil zum Beispiel eine grössere Stabilität zu verleihen.

Gemäss einer anderen Weiterbildung der Erfindung handelt es sich beim Element um eine an der Hinterseite des Trägerteils angebrachte Schicht. Die Schicht kann insbesondere durchgehend, das heisst ohne Durchbrüche, Aussparungen etc., ausgebildet sein. Vorteilhaft ist die Schicht flächendeckend zur Hinterseite des Trägerteils ausgebildet. Besonders einfach ist die Herstellung des Bauteils, wenn das Element eine Folie, zum Beispiel eine Metall- oder Kunststofffolie, ist. Die Folie kann transluzent, transparent oder opak sein. Im Falle einer Metallfolie kann sie Durchbrüche aufweisen, um eine Durchleuchtung zu ermöglichen.

Die Erfindung bezieht sich ausserdem auf ein Verfahren zur Herstellung eines Bauteils, welches insbesondere wie oben ausgeführt ausgebildet sein kann. Das Verfahren weist zumindest die folgenden Schritte auf:
- Bereitstellen eines Trägerteils und eines zumindest teilweise an einer Hinterseite und/oder an einem Seitenrand des Trägerteils angebrachten Elements in einer Kavität eines Spritzgusswerkzeugs, wobei das Element einen vom Seitenrand des Trägerteils seitlich vorstehenden Bereich aufweist, sowie
- Einspritzen eines Beschichtungsmaterials in die Kavität, so dass das Beschichtungsmaterial zum Ausbilden einer Deckschicht die Vorderseite des Trägerteils zumindest teilweise, bevorzugt vollständig, überflutet, wobei beim Überfluten der seitlich vorstehende Bereich des Elements als Abdichtung wirkt.

Die Abdichtung durch den seitlich vorstehenden Bereich des Elements dient bevorzugt dazu, ein Austreten des Beschichtungsmaterials aus dem Spritzgusswerkzeug und/oder ein Umlaufen des Trägerteils durch das Beschichtungsmaterial zur Hinterseite hin zu verhindern.

Das an der Hinterseite und/oder am Seitenrand des Trägerteils angebrachte Element und insbesondere dessen seitlich vorstehender Bereich liegt dabei vorzugsweise dichtend an einer Innenfläche des Spritzgusswerkzeugs an.

Vorteilhaft, um eine effiziente und somit kostengünstige Herstellung zu ermöglichen, werden das Basisteil, das Element und die Deckschicht in aufeinanderfolgenden oder parallel laufenden Prozessen auf einer Spritzgussmaschine hergestellt. Die Spritzgussmaschine weist hierzu vorteilhaft eine Wendeplatte oder eine Verschiebeplatte auf, um das Basisteil und/oder das Element nach seiner erfolgten Herstellung zu drehen bzw. zu verschieben und in der gedrehten oder verschobenen Position mit einer anderen Formhälfte eine Kavität zur Erzeugung der Deckschicht zu bilden. Das Basisteil, das Element und die Deckschicht, allenfalls von unterschiedlichen Bauteilexemplaren, können dann also zyklusweise und zyklusgleich hergestellt werden. Entsprechende Wendeplatten-, Schiebetisch- oder Drehtisch-Schliesseinheiten sind dem Fachmann aus dem Stand der Technik zur Genüge bekannt. Alternativ ist auch die Herstellung des Basisteils und/oder des Elements und/oder der Deckschicht mittels Extrusion möglich. Optional kann zum Beispiel mittels Extrusion eine Schutzschicht, insbesondere eine Schutzfolie, auf die Deckschicht aufgebracht werden, welche bevorzugt von der Deckschicht ablösbar ist. Selbstverständlich kann das Bauteil auch mittels Kombination von Spritzguss und Extrusion hergestellt werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittansicht eines schematisch dargestellten Bauteils gemäss einer ersten erfindungsgemässen Ausführungsform;
- Fig. 2: eine Schnittansicht des schematisch dargestellten Bauteils der Fig. 1 bei dessen Herstellung in einem Spritzgusswerkzeug;
- Fig. 3: eine Schnittansicht eines schematisch dargestellten Bauteils gemäss einer zweiten erfindungsgemässen Ausführungsform bei der Herstellung in einem Spritzgusswerkzeug;
- Fig. 4: eine Schnittansicht eines schematisch dargestellten Bauteils gemäss einer dritten erfindungsgemässen Ausführungsform bei der Herstellung in einem Spritzgusswerkzeug;
- Fig. 5: eine Schnittansicht eines schematisch dargestellten Bauteils gemäss einer vierten erfindungsgemässen Ausführungsform bei der Herstellung in einem Spritzgusswerkzeug;
- Fig. 6: eine Schnittansicht des schematisch dargestellten Bauteils der Figur 5, nach erfolgter Herstellung;
- Fig. 7: eine schematische Schnittansicht eines teilweise dargestellten Bauteils gemäss einer fünften erfindungsgemässen Ausführungsform;
- Fig. 8: eine Schnittansicht eines schematisch dargestellten Bauteils gemäss einer sechsten erfindungsgemässen Ausführungsform bei der Herstellung in einem Spritzgusswerkzeug;
- Fig. 9: eine schematische Schnittansicht eines teilweise dargestellten Bauteils gemäss einer siebten erfindungsgemässen Ausführungsform;
- Fig. 10: eine schematische Schnittansicht eines teilweise dargestellten Bauteils gemäss einer achten erfindungsgemässen Ausführungsform;
- Fig. 11: eine schematische Schnittansicht eines teilweise dargestellten Bauteils gemäss einer neunten erfindungsgemässen Ausführungsform;
- Fig. 12: eine schematische Schnittansicht eines teilweise dargestellten Bauteils gemäss einer zehnten erfindungsgemässen Ausführungsform;
- Fig. 13: eine schematische Schnittansicht eines teilweise dargestellten Bauteils gemäss einer elften erfindungsgemässen Ausführungsform; sowie
- Fig. 14: eine schematische Schnittansicht eines teilweise dargestellten Bauteils gemäss einer zwölften erfindungsgemässen Ausführungsform.

### BESCHREIBUNG BEVORZUGTER AUSFÜHRUNGSFORMEN

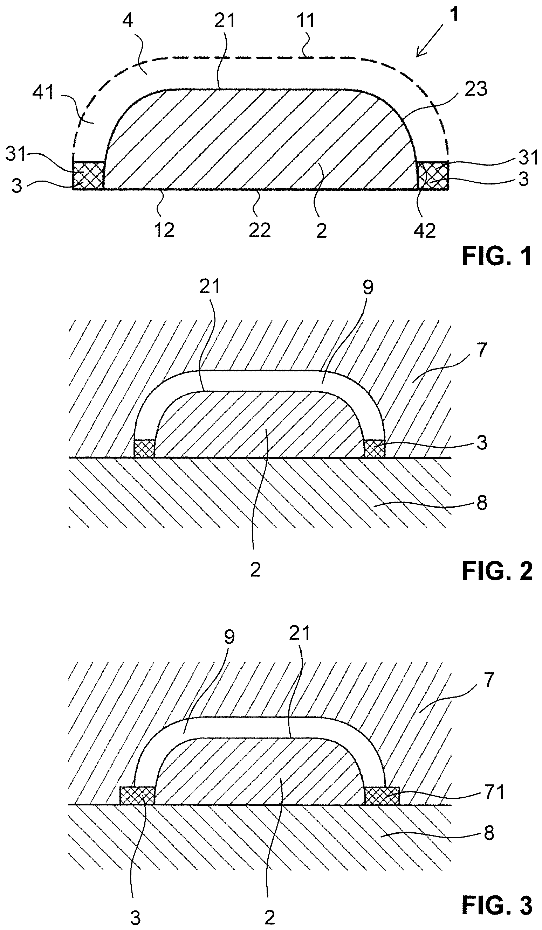

In den Figuren 1 bis 14 sind unterschiedliche Ausführungsformen von erfindungsgemässen Bauteilen sowie Varianten davon und bevorzugte Verfahren zu deren Herstellung beispielhaft illustriert. Merkmale, welche eine identische oder zumindest ähnliche Ausgestaltung und/oder Funktion aufweisen, sind in den Figuren 1 bis 14 jeweils mit denselben Bezugszeichen versehen. Die dargestellten Ausführungsformen dienen lediglich zur Illustration von möglichen Varianten von erfindungsgemässen Bauteilen sowie deren Herstellverfahren. Einzelne oder mehrere Elemente der verschiedenen Ausführungsformen und Herstellverfahren sind beliebig mit den Elementen von anderen Ausführungsformen bzw. Herstellverfahren kombinierbar. Die dargestellten Ausführungsformen und Herstellverfahren sind in keiner Weise als einschränkend zu verstehen.

Bei den in den Figuren 1 bis 14 dargestellten Bauteilen handelt es sich bevorzugt, aber nicht zwingend, jeweils um Dekorelemente. Bevorzugt sind die dargestellten Bauteile zudem für den Automobilbau und insbesondere als Einstiegs- oder Zierleiste vorgesehen.

Die Figur 1 zeigt ein erfindungsgemässes Bauteil 1 gemäss einer ersten Ausführungsform. Das Bauteil 1 weist eine Sichtseite 11 sowie eine zur Sichtseite 11 gegenüberliegend angeordnete Rückseite 12 auf. Die Sichtseite 11 ist bei bestimmungsgemässer Montage und/oder Verwendung des Bauteils 1 dem Betrachter zugewandt.

Das Bauteil 1 weist ein Trägerteil 2, eine unmittelbar daran angebrachtes Element 3 sowie eine ebenfalls unmittelbar daran angebrachte Deckschicht 4 auf. Das Element 3 dient bei der Herstellung des Bauteils 1, wie weiter unten noch ausgeführt wird, als Dichtmittel gegenüber dem Material der Deckschicht 4. Es kann deshalb und wird im Folgenden auch als Dichtelement 3 bezeichnet. Das Dichtelement 3 und die Deckschicht 4 sind jeweils fest, das heisst unlösbar, am Trägerteil 2 sowie aneinander angebracht.

Das Trägerteil 2 weist eine Vorderseite 21 sowie eine der Vorderseite 21 abgewandte Hinterseite 22 auf. Während die Vorderseite 21 zur Sichtseite 11 des Bauteils 1 hingewandt ist, ist die Hinterseite 22 zur Rückseite 12 des Bauteils hingewandt und bildet diese im vorliegenden Ausführungsbeispiel zumindest zum Teil. Am äusseren Rand des Trägerteils 2 verbindet eine umlaufende Seitenwand 23 die Vorderseite 21 mit der Hinterseite 22. Der Übergang von der Vorderseite 21 zur Seitenwand 23 erfolgt dabei gerundet. Im Bereich des in der Querschnittsansicht rechtwinkligen Übergangs der Seitenwand 23 zur Rückseite 22 ist das Dichtelement 3 an der Seitenwand 23 des Trägerteils 2 angebracht, insbesondere angespritzt.

Das Trägerteil 2 ist als Ganzes einstückig aus einem Kunststoffmaterial ausgebildet. Vorzugsweise ist es im Spritzgussverfahren hergestellt, wobei das Dichtelement 3 und die Deckschicht 4 jeweils daran angespritzt sind.

Das Dichtelement 3 ist aus einem anderen Material, insbesondere aus einem anderen Kunststoffmaterial, als das Trägerteil 2 hergestellt. Bevorzugt ist das Material des Dichtelements 3 weicher und/oder flexibler, insbesondere elastischer, als dasjenige des Trägerteils 2 ausgebildet. Das Dichtelement 3 erstreckt sich bevorzugt umlaufend und durchgehend um das Trägerteil 2 herum. In der vorliegenden Ausführungsform ist das Dichtelement 3 nur am Seitenrand 23, nicht jedoch an der Hinterseite 22 des Trägerteils 2 angebracht und kontaktiert dementsprechend nur den Seitenrand 23, nicht jedoch die Hinterseite 22.

Das Dichtelement 3 bildet, hier als Ganzes und bevorzugt umlaufend, einen vom Seitenrand 23 des Trägerteils 2 seitlich vorstehenden Bereich 31. Die Rückseite des Dichtelements 3 ist bündig zur Hinterseite 22 des Trägerteils 2 angeordnet und bildet mit dieser gemeinsam die Rückseite 12 des Bauteils 1.

Die Deckschicht 4 bedeckt die gesamte Vorderseite 21 des Trägerteils und bildet die Sichtseite 11 des Bauteils 1. Die Deckschicht 4 bildet im Bereich des Seitenrandes 23 einen Randbereich 41 und erstreckt sich dort bis zum Dichtelement 3 hin und bildet mit ihrer Oberfläche einen bündigen Übergang zum Dichtelement 3. Die Deckschicht 4 kontaktiert dabei mit einer Stirnfläche 42 das Dichtelement 3 und ist dort fest mit dem Dichtelement 3 verbunden. Die an der Stirnfläche 42 der Deckschicht 4 anliegende Oberfläche des Dichtelements 3 bildet bei der Herstellung des Bauteils 1 eine Dichtfläche.

Die Deckschicht 4 ist bevorzugt aus einem Lack hergestellt. Noch bevorzugter ist sie im Spritzgussverfahren aus einem Lack hergestellt und insbesondere an das Trägerteil 2 und an das Dichtelement 3 angespritzt.

In der Figur 2 ist die Herstellung des Bauteils 1 der Figur 1 dargestellt. Hierzu wird das bereits vorgefertigte Trägerteil 2 mit dem bereits daran angebrachten Dichtelement 3 in eine Kavität 9 eines Spritzgusswerkzeugs eingelegt. Die Kavität 9 wird durch ein erstes Formteil 7 und ein zweites Formteil 8 des Spritzgusswerkzeugs gebildet. Das Dichtelement 3 liegt dabei bevorzugt umlaufend an der Innenfläche des ersten Formteils 7 und bevorzugt umlaufend an der Innenfläche des zweiten Formteils 8 an und wird vorteilhaft vom ersten Formteil 7 sogar leicht komprimiert. Das Dichtelement 3 bildet dadurch eine äusserst effektive Abdichtung der Kavität 9 nach aussen hin im Bereich, wo das erste Formteil 7 und das zweite Formteil 8 aneinander anliegen.

Zur Ausbildung der Deckschicht 4 wird nun ein Deckschichtmaterial in flüssiger Form in die Kavität 9 eingespritzt, so dass die gesamte Vorderseite 21 sowie der Seitenrand 23 des Trägerteils 2 vom Deckschichtmaterial überflutet wird. Die Kavität 9 ist dabei formgebend für die Deckschicht 4 und insbesondere für deren die Sichtseite 11 bildenden Oberfläche.

Beim Einspritzen und Überfluten dichtet das Dichtelement 3 die Kavität 9 bevorzugt umlaufend um das Trägerteil 2 herum ab und verhindert dadurch ein Austreten des Deckschichtmaterials aus dem Spritzgusswerkzeug selbst in Fällen, in denen das Deckschichtmaterial sehr dünnflüssig ist, was beispielsweise bei Lacken sehr oft der Fall ist. Das Dichtelement 3 verhindert zudem, dass das Deckschichtmaterial beim Überfluten um den Seitenrand 23 herum zur Hinterseite 22 des Trägerteils 2 gelangen kann.

Die in der Figur 3 bei der Herstellung der Deckschicht 4 gezeigte Ausführungsform eines erfindungsgemässen Bauteils 1 unterscheidet sich dadurch von derjenigen der Figuren 1 und 2, dass das erste Formteil 7 eine Vertiefung 71 aufweist. Die Vertiefung 71 ist bevorzugt umlaufend um die Kavität 9 vorgesehen und unmittelbar im Bereich angeordnet, wo das erste Formteil 7 am zweiten Formteil 8 anliegt. Das Dichtelement 3 erstreckt sich hier zudem weiter seitlich nach aussen hin und zwar soweit, dass es die Vertiefung 71 des ersten Formteils gerade ausfüllt. Beim Schliessen des Spritzgusswerkzeugs wird das Dichtelement 3 dadurch nicht nur in radialer Richtung, sondern auch in Schliessrichtung des Spritzgusswerkzeugs zumindest geringfügig komprimiert, wodurch sich die Dichtwirkung noch weiter verbessert.

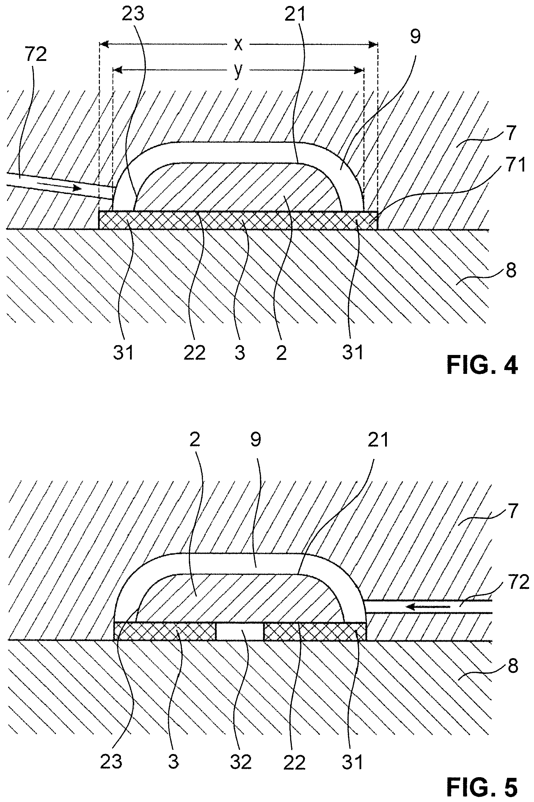

Bei der Ausführungsform der Figur 4 ist das Dichtelement 3 im Vergleich zu derjenigen der Figur 3 an der Hinterseite 22, jedoch nicht am Seitenrand 23 des Trägerteils angebracht. Das Dichtelement 3 bildet dabei eine durchgehende Schicht, bevorzugt Folie, mit welcher es die gesamte Rückseite 12 des Bauteils 1 bildet. Auch bei dieser Ausführungsform weist das Dichtelement 3 aber einen vom Seitenrand 23 des Trägerteils 2 seitlich vorstehenden Bereich 31 auf. Beim Einspritzen des Deckschichtmaterials durch eine im ersten Formteil 7 vorgesehene Einspritzöffnung 72 hindurch dient dieser seitlich vorstehende Bereich 31 zur Abdichtung der Kavität 9. In der Figur 4 ist zudem dargestellt, dass sich der seitlich vorstehende Bereich 31 um ein Mass (*x* - *y*)/2 in die umlaufende Vertiefung 71 des ersten Formteils 7 hinein erstreckt. Das Anbringen eines Dichtelements 3 in Form einer Folie an der Hinterseite 22 des Trägerteils 2, wie hier gezeigt, stellt eine besonders einfache, aber effiziente Möglichkeit dar, um die Kavität 9 bei der Herstellung der Deckschicht 4 abzudichten.

Bei der Ausführungsform der Figur 4 kann das Dichtelement 3 insbesondere eine OLED-Folie, eine Elektrolumineszenzfolie oder eine Platine mit einer Vielzahl daran angebrachter Leuchtdioden sein. Das Trägerteil 2 und/oder die Deckschicht 4 ist dann bevorzugt transparent oder transluzent ausgebildet, so dass die Deckschicht 4 von dem vom Dichtelement 3 ausgestrahlten Licht hinterleuchtbar ist. Das Trägerteil 2 und die Deckschicht 4 können aber auch beide opak ausgebildet sein. Die Deckschicht 4 ist dann von Licht umstrahlbar, welches in dem die Deckschicht 4 randseitig vorstehenden Bereich des Dichtelements 3 ausgestrahlt wird.

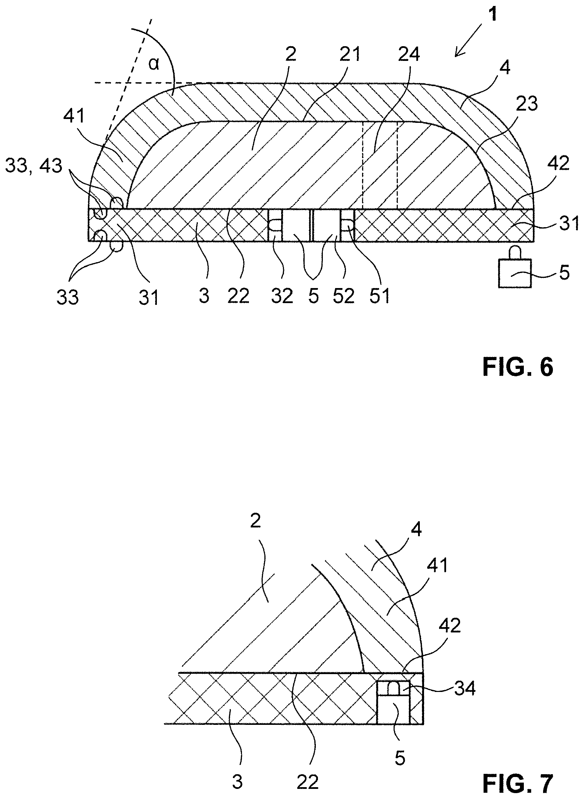

Bei der in den Figuren 5 und 6 gezeigten Ausführungsform weist das in Form einer Schicht an die Hinterseite 22 des Trägerteils 2 angebrachte Dichtelement 3 eine zentrale Aussparung 32 auf. Diese Aussparung 32 dient, wie in der Figur 6 gezeigt ist, zum Einsetzen von Leuchtelementen 5. Die Leuchtelemente 5 weisen jeweils eine Leuchtdiode 51 auf, welche auf einer Platine 52 angebracht ist. Die Leuchtelemente 5 dienen dazu, um Licht seitwärts in das transparent oder transluzent ausgebildete Dichtelement 3 einzukoppeln, welches somit als Lichtleiter dient. Im seitlich vorstehenden Bereich 31 gelangt das Licht via die Stirnfläche 42 in die ebenfalls transparent oder transluzent ausgebildete Deckschicht 4 und von dieser zum Betrachter des Bauteils 1. Eine oder mehrere zusätzliche Leuchtelemente 5 können rückseitig zum Dichtelement 4, insbesondere rückseitig zum seitlich vorstehenden Bereich 31 angeordnet sein. Das Trägerteil kann transparent, transluzent oder opak ausgebildet sein.

Um das Einkoppeln des Lichts vom seitlich vorstehenden Bereich 31 des Dichtelements 3 in die Deckschicht 4 zu verbessern, kann das Dichtelement 3 vorder- und/oder rückseitig angeordnete Oberflächenstrukturen 33 aufweisen. Die Oberflächenstrukturen 33 sind bevorzugt als lokale Erhebungen und Vertiefungen ausgebildet und dienen zur gezielten Lichtumlenkung zur Sichtseite 11 hin. Die vorderseitig angeordneten Oberflächenstrukturen 33 können in Oberflächenstrukturen 43 eingreifen, welche an der Stirnfläche 42 der Deckschicht 4 ausgebildet sind. Die Oberflächenstrukturen 33 und 43 bilden dadurch ineinandergreifende Grenzflächenstrukturen, welche nicht nur zur gezielten Lichtumlenkung dienen können, sondern auch eine bessere Verbindung des Dichtelements 3 mit der Deckschicht 4 bewirken.

Um die Ausbreitung des Lichts innerhalb der Deckschicht 4 zu verbessern und eine gleichmässige Ausleuchtung des Bauteils 1 zu erzielen, weist die Deckschicht 4 bevorzugt einen deutlich anderen Brechungsindex auf als das Trägerteil 2. Die Lichtstrahlen verbleiben bei ihrer Ausbreitung dann länger in der Deckschicht 4 bevor sie zum Betrachter hin aus dieser austreten.

Das Trägerteil 2 kann einen oder mehrere sich von der Hinterseite 22 zur Vorderseite 21 erstreckende, d.h. durchgehende Durchbrüche 24 aufweisen, welche hohl oder mit einem Füllmaterial gefüllt sein können. Beim Füllmaterial kann es sich insbesondere auch um das Material der Deckschicht 4 handeln. Der oder die Durchbrüche 24 können dazu dienen, um zusätzliches Licht von dem wie erwähnt als Lichtleiter ausgebildeten Dichtelement 3 zur Deckschicht 4 zu leiten.

Wie in der Figur 6 zudem gezeigt ist, weist der äussere Randbereich 41 der Deckschicht 4 im vorliegenden Ausführungsbeispiel eine Aussenfläche auf, die in einem Winkel α zur Flächenausdehnungsrichtung der Vorderseite 21 des Trägerteils 2 steht, welcher sich von der Vorderseite 21 her aufgrund einer Abrundung des Bauteils 1 kontinuierlich von ca. 0° bis ca. 90° vergrössert.

In der Figur 7 ist eine Ausführungsform gezeigt, bei welcher das Dichtelement 3 unmittelbar unterhalb der Stirnfläche 42 der Deckschicht 4 eine rückseitige Vertiefung 34 aufweist. In diese rückseitige Vertiefung 34 ist ein Leuchtelement 5 eingesetzt, welches zum Einstrahlen von Licht in das Dichtelement 3 und insbesondere in die Deckschicht 4 dient. Aufgrund der rückseitigen Vertiefung 34 wird eine effiziente Lichteinkopplung erreicht und das Leuchtelement ist gut vor externen Einflüssen geschützt.

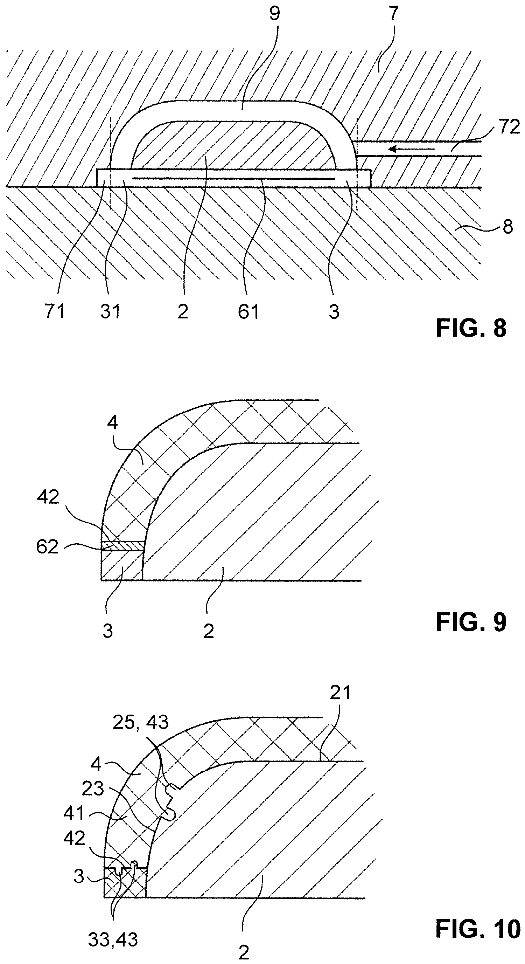

In der Figur 8 wird die Herstellung eines Bauteils 1 gezeigt, bei welchem das Dichtelement 3 in Form einer transparenten oder transluzenten Schicht an der Hinterseite 22 des Trägerteils 2 angebracht ist und diese bevorzugt vollständig zur Rückseite hin bedeckt. Das Dichtelement 3 bildet die gesamte Rückseite 12 des Bauteils 1. Innerhalb des Dichtelements 3 ist eine Elektrolumineszenzfolie 61 angeordnet, welche zum Einstrahlen von Licht in das Trägerteil 2 und/oder die Deckschicht 4, welche in der Kavität 9 gerade hergestellt wird, dient. Je nachdem sind das Trägerteil 2 und/oder die Deckschicht 4 aus einem transparenten und/oder transluzenten Material hergestellt. Beim Material der Deckschicht 4 handelt es sich bevorzugt um einen Lack.

Die Elektrolumineszenzfolie 61 ist bevorzugt im Material des Dichtelements 3 eingebettet. Wenn das Dichtelement 3 im Spritzgussverfahren hergestellt ist, ist die Elektrolumineszenzfolie 61 vorteilhaft vollständig vom transparenten oder transluzenten Material des Dichtelements 3 umspritzt. Die Elektrolumineszenzfolie 61 ist dadurch optimal vor externen Einflüssen geschützt. Ausserdem kann dadurch eine sehr effiziente Lichteinkopplung in das Dichtelement 3 erreicht werden.

Der sich bei der Herstellung in die Vertiefung 71 hineinerstreckende Teil des seitlich vorstehenden Bereiches 31 des Dichtelements 3 kann optional nach dem Entformen des Bauteils 1 aus dem Spritzgusswerkzeug abgetrennt werden, was in der Figur 8 mit gestrichelten Linien angedeutet ist.

Bei der Ausführungsform der Figur 9 ist zwischen dem Dichtelement 3 und der Deckschicht 4 im Bereich der Stirnfläche 42 ein Klebstoff und/oder Haftvermittler 62 vorgesehen, um das Dichtelement 3 und die Deckschicht 4 dort aneinander zu binden. Falls eine Lichteinkopplung vom Dichtelement 3 in die Deckschicht 4 gewünscht ist, kann ein transparenter oder transluzenter Klebstoff und/oder Haftvermittler verwendet werden.

In der Ausführungsform der Figur 10 sind zur Verbesserung der Bindung des Dichtelements 3 und der Deckschicht 4 im Bereich der Stirnfläche 42 ineinandergreifende Grenzflächenstrukturen vorgesehen. Die Grenzflächenstrukturen werden durch zueinander komplementäre Oberflächenstrukturen 33, 43 gebildet, welche an den jeweiligen Oberflächen des Dichtelements 3 und der Deckschicht 4 ausgebildet sind. Die Oberflächenstrukturen 33 und 43 werden jeweils durch lokale Erhöhungen und Vertiefungen gebildet. Weitere Grenzflächenstrukturen zur Verbesserung der Anbindung können in den Grenzbereichen zwischen dem Trägerteil 2 und der Deckschicht 4 vorgesehen sein. Diese Grenzflächenstrukturen werden durch Oberflächenstrukturen 25 und 43 des Trägerteils 2 bzw. der Deckschicht 4 gebildet. Alle erwähnten Oberflächenstrukturen 25, 33, 43 können aber nicht zur verbesserten Anbindung der jeweiligen Bauteilkomponenten dienen, sondern auch zur gezielten Lichtumlenkung in die Deckschicht 4 hinein und/oder zum Betrachter des Bauteils 1 hin.

In der Figur 1 ist eine Ausführungsform dargestellt, bei welcher das Dichtelement 3 als eine rückseitig am Trägerteil 2 angebrachte, durchgehende Schicht ausgebildet ist, die sich bevorzugt umlaufend um die rückseitige äussere Seitenkante des Trägerteils 2 herum zum Seitenrand 23 hin erstreckt. Der Seitenrand 23 wird dadurch zumindest teilweise vom Dichtelement 3 bedeckt, welches somit sowohl an der Hinterseite 22 als auch am Seitenrand 23 des Trägerteils 2 angebracht ist.

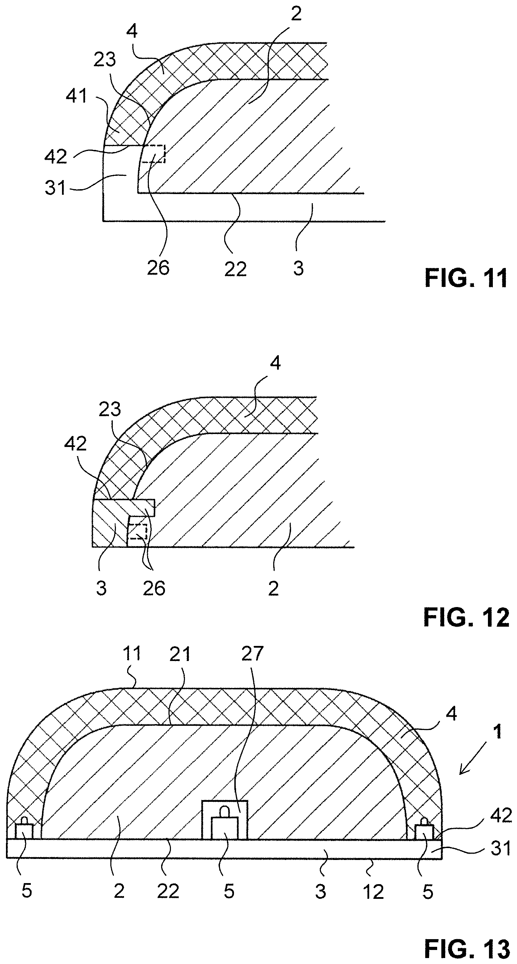

Optional, wie in der Figur 11 mit gestrichelter Linie angedeutet ist, kann sich das Dichtelement 3 zudem im Bereich des Seitenrandes 23 in eine seitliche Vertiefung 26 des Trägerteils 2 hinein erstrecken. Die Anbindung des Dichtelements 3 an das Trägerteil 2 kann dadurch verbessert werden. Ausserdem kann dies bei der Herstellung eine verbesserte Abdichtung zur Hinterseite 22 des Trägerteils 2 hin bewirken. Das dünnflüssige Deckschichtmaterial kann sich dadurch nicht zur Hinterseite 2 hin ausbreiten.

In der Ausführungsform der Figur 12 ist das Dichtelement 3 nur im Bereich des Seitenrandes 23 des Trägerteils 2 vorhanden, nicht jedoch im Bereich der Hinterseite 22. Das Trägerteils 2 hat hier eine erste sowie, optional, wie mit gestrichelter Linie gezeigt ist, eine zweite seitliche Vertiefungen 26. Falls sich die seitlichen Vertiefungen 26 umlaufend um das Trägerteil 2 erstrecken, kann jeweils auch von einer Ringnut gesprochen werden.

In der Ausführungsform der Figur 13 weist das Trägerteil 2 im Bereich seiner Hinterseite 22 eine zentral angeordnete rückseitige Vertiefung 27 auf. In diese rückseitige Vertiefung 27 ist ein Leuchtelement 5 eingesetzt, um Licht in das transparent oder transluzent ausgebildete Trägerteil 2 einzustrahlen. Das Leuchtelement 5 ist zur Rückseite 12 hin auf einer Platine oder Leiterplatte angebracht, welche hier das Dichtelement 3 bildet. Aufgrund der rückseitigen Bedeckung des gesamten Trägerteils 2 durch die Platine/Leiterplatte bzw. das flächige Dichtelement 3 ist das Leuchtelement 5 optimal vor äusseren Einflüssen geschützt.

Weitere Leuchtelemente 5 sind bei der Ausführungsform der Figur 13 im Bereich der Stirnfläche 42 der transparenten oder transluzenten Deckschicht 4 angeordnet. Diese Leuchtelemente 5, welche ebenfalls auf dem als Platine oder Leiterplatte ausgebildeten Dichtelement 3 angebracht sind, sind dabei seitlich und zur Sichtseite 11 hin jeweils vollständig mit dem Material, insbesondere dem Lack, der Deckschicht 4 umspritzt. Dadurch kann eine äusserst effiziente Lichteinkopplung sowie ein optimaler Schutz der Leuchtelemente 5 erreicht werden.

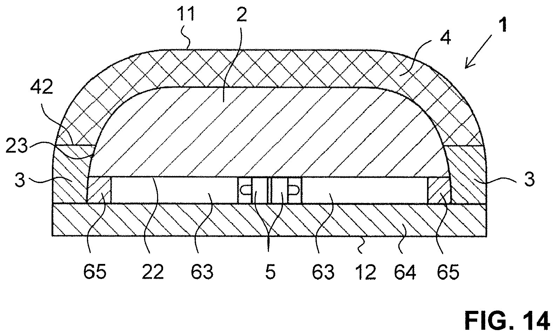

Bei der in der Figur 14 gezeigten Ausführungsform sind das Trägerteil 2 und die Deckschicht 4 bevorzugt jeweils opak und das Dichtelement 3 transparent oder transluzent ausgebildet. Das Dichtelement 3 erstreckt sich vorteilhaft um das gesamte Trägerteil 2 herum und ist lediglich im Bereich des Seitenrandes 23 am Trägerteil 2 angebracht. Dabei erstreckt sich das Dichtelement 3 vom Trägerteil 2 derart zur Rückseite, dass es der Hinterseite 22 des Trägerteils 2 zur Rückseite hin umlaufend vorsteht. Dadurch bildet sich im Bereich der Hinterseite 22 radial innerhalb des Dichtelements 3 eine Vertiefung, in welche ein Lichtleiter 63 mit einer zentralen Aussparung eingesetzt ist. Innerhalb der zentralen Aussparung des Lichtleiters 63 sind Leuchtelemente 5 angeordnet, welche zum Einstrahlen von Licht in den Lichtleiter 63 dienen. Seitlich um den Lichtleiter 5 herum erstreckt sich umlaufend ein transparentes oder transluzentes ringförmiges Kunststoffelement 65, wobei es mit seiner radialen Innenfläche direkt an der radialen Aussenfläche des Lichtleiters 63 anliegt. Das Kunststoffelement 65 könnte grundsätzlich auch durch das Trägerteil 2 gebildet werden oder alternativ auch entfallen. Vom Lichtleiter 63 gelangt das Licht somit in das Kunststoffelement 65 und von dort weiter radial nach aussen in das transparent oder transluzent ausgebildete Dichtelement 3. Vom Dichtelement 3 gelangt das Licht in radialer Richtung nach aussen und umstrahlt dadurch das Bauteil 1. Der Betrachter erhält dadurch einen schwebenden Eindruck in Bezug auf die opak und insbesondere aus einem Lack ausgebildete Deckschicht 4. Um die Leuchtelement 5, den Lichtleiter 63 und das Kunststoffelement 65 zu halten und/oder zu schützen und/oder um ein Austreten von Licht zur Rückseite hin zu verhindern, ist rückseitig ein opakes Gehäuse 64 angeordnet. Das Gehäuse 64 bedeckt das gesamte Trägerteil 2, die gesamte Deckschicht 4 und das gesamte Dichtelement 3 zur Rückseite hin und bildet die gesamte Rückseite 12 des Bauteils 1.

Die vorliegende Erfindung ist selbstverständlich nicht auf die vorstehend erläuterten Ausführungsbeispiele begrenzt, sondern eine Vielzahl von Abwandlungen ist möglich. So sind die unterschiedlichen, bzgl. der Figuren 1 bis 14 erläuterten Elemente der verschiedenen Ausführungsformen zum Beispiel austauschbar oder ersetzbar. Viele der Merkmale dieser Ausführungsformen können sogar ganz entfallen. Beispielsweise müssen das Trägerteil 2 und das Dichtelement 3 nicht zwingend im Spritzgussverfahren hergestellt sein, sondern es könnten zum Beispiel jeweils auch vorkonfektionierte Elemente verwendet werden. Auch die Deckschicht 4 muss nicht zwingend im Spritzgussverfahren hergestellt sein, sondern könnte zum Beispiel auch auf das Trägerteil 2 aufextrudiert sein. Die Begrenzung beim Ausbreiten des Deckschichtmaterials durch das Dichtelement wäre weiterhin vorhanden. Anstelle eines herkömmlichen Spritzgusswerkzeugs, wie in den Figuren 2 bis 5 und 8 gezeigt, könnte jeweils auch ein Spritzgusswerkzeug mit einer Schiebetisch- oder Dreheinheit verwendet werden, um die Effizienz in der Bauteilherstellung zu steigern. Eine Vielzahl weiterer Abwandlungen ist möglich.

**BEZUGSZEICHENLISTE**

| | | | |
|---|---|---|---|
| 1 | Bauteil | 41 | Randbereich |
| 11 | Sichtseite | 42 | Stirnfläche |
| 12 | Rückseite | 43 | Oberflächenstrukturen |
| | | | |
| 2 | Trägerteil | 5 | Leuchtelement |
| 21 | Vorderseite | 51 | Leuchtdiode |
| 22 | Hinterseite | 52 | Platine |
| 23 | Seitenrand | | |
| 24 | Durchbruch | 61 | Elektrolumineszenzfolie |
| 25 | Oberflächenstrukturen | 62 | Klebstoff / Haftvermittler |
| 26 | Seitliche Vertiefung | 63 | Lichtleiter |
| 27 | Rückseitige Vertiefung | 64 | Gehäuse |
| | | 65 | Kunststoffelement |
| 3 | Dichtelement | | |
| 31 | Seitlich vorstehender Bereich | 7 | Erstes Formteil |
| 32 | Aussparung | 71 | Vertiefung |
| 33 | Oberflächenstrukturen | 72 | Einspritzöffnung |
| 34 | Rückseitige Vertiefung | 8 | Zweites Formteil |
| | | 9 | Kavität |
| 4 | Deckschicht | | |

## Patentansprüche

1. Bauteil (1), insbesondere für ein Fahrzeug, mit einer Sichtseite (11) und einer Rückseite (12), aufweisend
ein Trägerteil (2) mit einer Vorderseite (21), einer Hinterseite (22) und einem die Vorderseite (21) und die Hinterseite (22) verbindenden, umlaufenden Seitenrand (23);
ein Element (3), welches zumindest teilweise an der Hinterseite (22) und/oder am Seitenrand (23) des Trägerteils (2) angebracht ist, und welches einen vom Seitenrand (23) des Trägerteils (2) seitlich vorstehenden Bereich (31) aufweist; sowie
eine Deckschicht (4), welche die Vorderseite (21) des Trägerteils (2) zumindest teilweise bedeckt und zumindest einen Teil der Sichtseite (11) des Bauteils (1) bildet,
wobei der seitlich vorstehende Bereich (31) des Elements (3) die Deckschicht (4) kontaktiert und einen äusseren umlaufenden Randbereich (41) der Deckschicht (4) zur Rückseite hin zumindest teilweise bedeckt.

2. Bauteil (1) nach Anspruch 1, wobei der seitlich vorstehende Bereich (31) des Elements (3) aus einem anderen Material hergestellt ist als das Trägerteil (2).

3. Bauteil (1) nach Anspruch 2, wobei der seitlich vorstehende Bereich (31) des Elements (3) aus einem weicheren Material hergestellt ist als das Trägerteil (2).

4. Bauteil (1) nach einem der vorhergehenden Ansprüche, wobei der seitlich vorstehende Bereich (31) des Elements (3) aus einem elastischen Material hergestellt ist.

5. Bauteil (1) nach einem der vorhergehenden Ansprüche, wobei sich der seitlich vorstehende Bereich (31) des Elements (3) umlaufend um das Trägerteil (2) herum erstreckt.

6. Bauteil (1) nach einem der vorhergehenden Ansprüche, wobei die Deckschicht (4) aus einem Lack und bevorzugt im Spritzgussverfahren hergestellt ist.

7. Bauteil (1) nach einem der vorhergehenden Ansprüche, wobei das Trägerteil (2) und das Element (3) jeweils im Spritzgussverfahren hergestellt und bevorzugt aneinander angespritzt sind.

8. Bauteil (1) nach einem der vorhergehenden Ansprüche, wobei die Deckschicht (4) transparent oder transluzent ausgebildet ist.

9. Bauteil (1) nach einem der vorhergehenden Ansprüche, ausserdem aufweisend zumindest ein Leuchtelement (5), welches zum Hinterleuchten, Beleuchten oder Umstrahlen der Deckschicht (4) dient.

10. Bauteil (1) nach einem der vorhergehenden Ansprüche, wobei das Element (3) die Funktion eines Lichtleiters oder eines Leuchtelements hat.

11. Bauteil (1) nach einem der vorhergehenden Ansprüche, wobei am Trägerteil (2) und/oder am Element (3) und/oder an der Deckschicht (4) Oberflächenstrukturen (25, 33, 43) ausgebildet sind, welche zur gezielten Umlenkung des von einem Leuchtelement (5) ausgestrahlten Lichts dienen.

12. Bauteil (1) nach einem der vorhergehenden Ansprüche, wobei die Deckschicht (4) zumindest teilweise in ihrem äusseren umlaufenden Randbereich (41), vorzugsweise jedoch vollständig, zur Rückseite hin vom seitlich vorstehenden Bereich (31) des Elements (3) bedeckt ist.

13. Bauteil (1) nach einem der vorhergehenden Ansprüche, wobei der seitlich vorstehende Bereich (31) im Wesentlichen das gesamte Element (3) bildet.

14. Bauteil (1) nach einem der vorhergehenden Ansprüche, wobei es sich beim Element (3) um eine an der Hinterseite (22) des Trägerteils (2) angebrachte Schicht handelt.

15. Verfahren zur Herstellung eines Bauteils (1), insbesondere eines Bauteils (1) gemäss einem der vorhergehenden Ansprüche, aufweisend folgende Schritte:
- Bereitstellen eines Trägerteils (2) und eines zumindest teilweise an einer Hinterseite (22) und/oder an einem Seitenrand (23) des Trägerteils (2) angebrachten Elements (3) in einer Kavität (9) eines Spritzgusswerkzeugs (7, 8), wobei das Element (3) einen vom Seitenrand (23) des Trägerteils (2) seitlich vorstehenden Bereich (31) aufweist, sowie
- Einspritzen eines Beschichtungsmaterials in die Kavität (9), so dass das Beschichtungsmaterial zum Ausbilden einer Deckschicht (4) die Vorderseite (21) des Trägerteils (2) zumindest teilweise überflutet, wobei beim Überfluten der seitlich vorstehende Bereich (31) des Elements (3) als Abdichtung wirkt.
